# EUROPEAN PATENT APPLICATION

(11) **EP 4 707 651 A1**
(43) Date of publication of application: **11.03.2026**
(21) Application number: 25191173.1
(22) Date of filing: 23.07.2025
(51) Int. Cl.: F16K 31/06, F16K 31/40

(54) **COMPENSATED FLOW CONTROL VALVE**

(30) Priority: 04.09.2024 IT 202400019690
(71) Applicant: ELT Fluid S.R.L., 42035 Castelnovo Né Monti (RE) (IT)
(72) Inventor: MANFREDI, Danilo, 42035 CASTELNOVO NE' MONTI (RE) (IT); GABRINI, Flavio, 42020 QUATTRO CASTELLA (RE) (IT)
(74) Representative: Corradini, Cesare

(57) **Abstract**

A flow control valve (100) is described, comprising: a valve body (105), a shutter body (185) slidingly coupled to the valve body (105), an orifice (255) made in the shutter body (185), a needle shutter (265) sliding from a closing position of said orifice (255) towards various opening positions of said orifice (255), a movable core (290) sliding in the same direction as the needle shutter (265) and adapted to slidingly drag one or more first springs (330) adapted to push the movable core (290) and/or the needle shutter (265) along the sliding direction towards the shutter body (185), an electric coil (325) adapted to be electrically powered to operate the movable core (290) in the direction away from the shutter body (185), in contrast with the action of each of said first springs (330), and at least a second spring (355), operatively interposed between said movable core (290) and said needle shutter (265) which while opposing itself with an elastic reaction force thereof, allows the needle shutter (265) to perform a relative movement with respect to the movable core (290), along the sliding direction and in the direction towards the shutter body (185), due to a pressure increase in the service chamber (155).

## Description

### Technical field

The present invention relates to a flow control valve for incompressible fluids, e.g., for oil, which can find useful but not exclusive application in the field of hydraulics.

### State of the art

As is known, flow control valves are used within countless hydraulic circuits.

An example of these circuits is that used to operate the hydraulic lifting of loading platforms, such as those defined by the forks of forklifts.

In fact, this circuit generally comprises at least one hydraulic jack, e.g., a single-acting jack, and a pump adapted to withdraw oil from a tank and send it pressurised inside the jack's operating chamber, so as to cause the jack to lengthen and the loading platform to consequently lift.

To operate the reverse movement, i.e., lowering the loading platform, the operating chamber of the jack is often placed directly in communication with the tank, so that the weight of the loading platform, compressing the oil in the operating chamber, can push the oil to flow out towards the tank, causing the jack to shorten and, indeed, lower the loading platform.

Normally, this outflow of oil is controlled by means of a flow control valve which, regulating/varying the oil flow rate towards the tank, allows to regulate/vary the lowering speed of the loading platform.

This flow control valve generally comprises a shutter body which, being able to assume a plurality of intermediate positions between a maximum closed position and a maximum open position, is advantageously able to proportionally partition the flow of oil passing through the valve.

The stroke of the shutter body between these positions is generally governed by a needle shutter, which is adapted to open and close an orifice of the shutter body, which puts the inlets in communication with the outlets of the valve, so as to vary the pressure balances and consequently cause the stroke of the shutter body.

The needle shutter is coupled to a movable core, typically of ferromagnetic material, which is normally pushed by springs in the direction to allow the needle shutter to close the orifice, but which can be selectively attracted to move in the opposite direction by the electromagnetic field generated by an electric actuating coil.

Thereby, depending on the intensity of the electric current applied to the coil, it is possible to vary the magnitude of the magnetic attraction on the movable core and, consequently, the magnitude of the stroke of the needle shutter and the shutter body, thus obtaining a different partialization of the valve and a different flow rate of fluid in output.

However, a drawback of these flow control valves is that for a given position of the shutter body, should the pressure of the oil in input increase, this increase in pressure could cause, if it exceeds certain limits, an undesirable (as it is not required) increase in the flow rate in output as well, and naturally vice versa.

In the example circuit outlined above, such a scenario can occur, for example, as a function of the masses which are carried on the loading platform.

In fact, if the loading platform is empty, its weight compresses the oil in the hydraulic jack at a lower pressure with respect to the case wherein the loading platform is loaded with masses (and therefore heavier).

It follows that, for the same position of the shutter body of the flow control valve, the loading platform could drop faster when loaded with respect to when empty (or less loaded).

To avoid this eventuality, it is known to use a second valve in the circuit, in addition to the flow control valve, which is adapted to compensate for the flow rate variation, which however complicates the circuit, also making it relatively bulky and expensive.

On the other hand, there are also other types of flow control valves, different from that outlined above, which are able to maintain the flow rate constant even following changes in inlet pressure, but are not able to completely stop the oil flow, as instead could be necessary, for example in the circuit outlined above, in order to stop the loading platform at various heights.

These flow control valves must therefore also be paired with a second valve, e.g., a shutoff valve, capable of completely shutting off the communication between the hydraulic jack and the tank.

### Disclosure of the invention

In light of the above, an aim of the present invention is to solve the aforementioned drawback of the known art by providing a flow control valve of the first type outlined above, but capable of intrinsically compensating any pressure variations to which the fluid in input can be subjected.

This and other aims are achieved by the characteristics of the invention reported in independent claim 1. The dependent claims outline preferred and/or particularly advantageous aspects of the invention but not strictly necessary for implementing it.

In particular, an embodiment of the present invention provides a flow control valve comprising:
- a valve body provided with at least one inlet port, at least one outlet port and a valve seat,
- a shutter body slidingly coupled to the valve body, so as to be able to slide with respect to the latter along a predetermined sliding direction, from a maximum closing position of the valve seat, wherein the ratio of a fluid flow rate overall entering from all the inlet ports to a fluid flow rate overall exiting from all the outlet ports is at a minimum value, preferably equal to zero (viz., there is no passage of fluid) to a maximum opening position of the valve seat, wherein the ratio of the overall fluid flow rate entering from all the inlet ports to the overall fluid flow rate exiting from all the outlet ports is at a maximum value, passing through a plurality of intermediate positions, wherein the ratio of the overall fluid flow rate entering from all the inlet ports to the overall fluid flow rate exiting from all the outlet ports is progressively increasing from the minimum value to the maximum value,
- an orifice made in the shutter body and capable of putting, (at least and/or also) when the shutter body is in the closing position of the valve seat, at least one of the outlet ports in communication with a service chamber communicating with at least one of the inlet ports,
- a needle shutter accommodated in the service chamber and sliding therein along the same sliding direction of the shutter body from a closing position of said orifice towards various opening positions of said orifice, moving in a direction away from the shutter body, and vice versa from the opening positions of said orifice towards the closing position of said orifice, moving in a direction towards the shutter body,
- a movable core accommodated in the service chamber, which is sliding in the same sliding direction as the needle shutter in both directions, and to which the needle shutter is coupled in such a way that it can be dragged in sliding by it, at least in the direction away from the shutter body, such a movable core being operable in the direction away from the shutter body by an electric coil adapted to be electrically powered,
- one or more first springs adapted to push the movable core and/or the needle shutter along the sliding direction in the direction towards the shutter body, and
- a second spring, operatively interposed between said movable core and said needle shutter, which, while opposing with an elastic reaction force thereof, allows the needle shutter to make a relative movement with respect to the movable core, along the sliding direction and in the direction towards the shutter body, due to an increase in pressure in the service chamber.

Thanks to this solution, by powering the electric coil with a certain electric current, it is effectively possible, as in the flow control valves of the known art, to move the needle shutter so as to open the orifice of the shutter body, which consequently moves to an open or partially open position of the valve seat.

Starting from this configuration, should there be an increase in the pressure of the fluid in input, such pressure, which is also transmitted inside the service chamber, is nevertheless effectively able to move the needle shutter, independently of the movable core, in the direction towards the shutter body in contrast to the second spring alone.

This stroke then allows the needle shutter to reduce the passage through the orifice, thus further increasing the pressure in the service chamber, which then becomes capable of pushing the shutter body at least slightly towards the closing position, causing a reduction in the flow rate of the fluid in output.

In practice, although the increase in pressure of the fluid in input would tend to increase the flow rate of the fluid in output, the stroke of the needle shutter, and consequently of the shutter body, allows the degree of opening of the valve seat to be automatically reduced, so as to cause a decrease in flow rate which compensates for the increase due to pressure.

In particular, by appropriately sizing the various elements forming the valve (e.g., orifice, second spring, etc.), it can be advantageously possible to ensure that the decrease in flow rate, due to the lower degree of opening of the valve seat, is substantially equal to the increase in flow rate due to the increase in pressure, thus managing to keep the flow rate in output almost constant even following fluctuations in the pressure of the fluid in input.

According to an aspect of the invention, the second spring can be a helical compression spring threaded onto the needle shutter.

This choice allows to make a particularly simple and reliable valve.

Another aspect of the invention envisages that said one or more first springs, also for example helical springs, can be adapted to act on the movable core and/or on the needle shutter through an intermediate body, which is released from the movable core and from the needle shutter with respect to the sliding direction, but is adapted to abut on a head of the needle shutter, which is distal with respect to the orifice, and on a surface of the movable core, due to the effect of the thrust exerted by said one or more first springs, and that the elastic reaction of the second spring can be adapted to push the needle shutter towards said intermediate body.

The presence of this intermediate body has the advantage of allowing the first spring to push the movable core and/or the needle shutter towards the closed orifice position, without (or only partially) burdening the second spring, which can then carry out its function more effectively.

According to another aspect of the invention, the intermediate body can comprise a bushing slidingly threaded onto the needle shutter so as to allow reciprocal movements along the sliding direction, a bottom wall adapted to close an end of the bushing and to abut the head of the needle shutter, and an annular flange protruding from the opposite end of the bushing which is adapted to abut the surface of the movable core.

This form of the needle shutter is particularly simple, compact and effective.

A further aspect of the invention envisages that the surface of the movable core on which the intermediate body abuts can comprise a recess in which the second spring is accommodated, which is interposed between a bottom surface of said recess and the head of the needle shutter.

This solution allows to further increase the compactness of the valve.

The recess can then be in communication with a through hole, through which the needle shutter protrudes from the movable core, extending towards the orifice of the shutter body.

According to a further aspect of the invention, the intermediate body, e.g., the bottom wall of the bushing, can be provided with an opening adapted to expose the head of the needle shutter to the pressure of the service chamber.

Thereby, a particularly reliable solution is provided so that the pressure of the service chamber can be capable of pushing the needle shutter in the direction of compressing the second spring.

Another aspect of the invention is that the intermediate body can be contained in an internal cavity of the movable core, which is constantly in communication with the service chamber, for example by means of a ductwork obtained directly in the movable core itself. This solution also has the advantage of optimising the distribution of volumes within the valve without impairing the functionality thereof.

### Brief description of the drawings

Further features and advantages of the invention will be more apparent after reading the following description provided by way of a non-limiting example, with the aid of the accompanying drawings.
Figure 1 is a sectional view of a flow control valve according to an embodiment of the present invention, shown in maximum closing position.
Figure 2 is the detail II-II of Figure 1 shown in an enlarged scale.
Figure 3 is the detail III-III of Figure 1 shown in an enlarged scale.
Figure 4 is the sectional view of the flow control valve of Figure 1, shown at the instant when the needle shutter is moved away from the shutter body, opening the orifice.
Figure 5 is the detail V-V of Figure 4 shown in an enlarged scale.
Figure 6 is the detail VI-VI of Figure 4 shown in an enlarged scale.

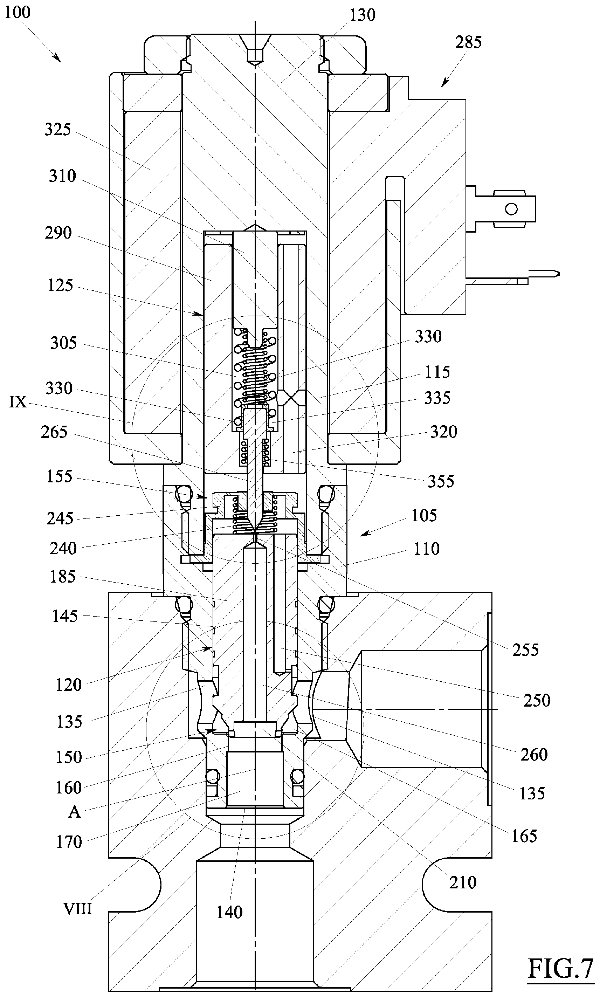

Figure 7 is a sectional view of the flow control valve of Figure 1, shown in the opening position (e.g., maximum opening).
Figure 8 is the detail VIII-VIII of Figure 7 shown in an enlarged scale.
Figure 9 is the detail IX-IX of Figure 7 shown in an enlarged scale.

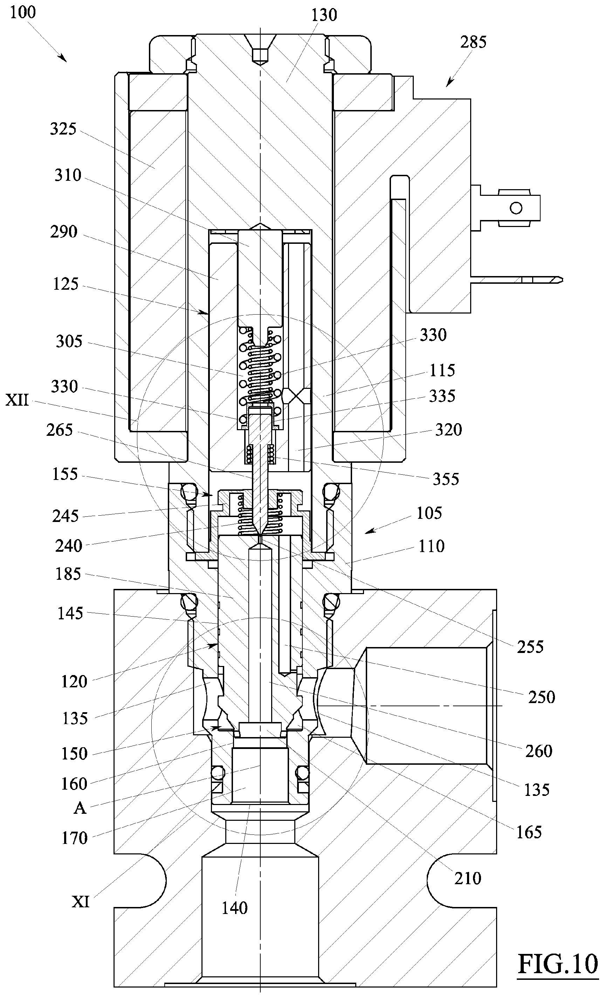

Figure 10 is a sectional view of the flow control valve of Figure 1, shown in the condition where there is an increase in the pressure of the fluid in put, starting from the configuration of Figure 7.
Figure 11 is the detail XI-XI of Figure 10 shown in an enlarged scale.
Figure 12 is the detail XII-XII of Figure 10 shown in an enlarged scale.

### Detailed description

As shown in the above figures, a flow control valve 100 according to the present invention can firstly comprise an internally hollow valve body 105.

This valve body 105 can comprise (or be formed by) a first portion 110 and optionally a second portion 115, each of which can have a substantially tubular shape whose axis coincides with that of the other portion.

First portion 110 can provide an internal cavity 120, substantially cylindrical, whose axis can, for example, coincide with the axis of first portion 110 itself.

Internal cavity 120 of first portion 110 can have at least one of its axial ends open.

Similarly, second portion 115 can provide an internal cavity 125, e.g., substantially cylindrical, whose axis can, for example, coincide with the axis of second portion 115 itself.

Internal cavity 125 of second portion 115 can also have at least one of its axial ends open. The opposite axial end of internal cavity 125 can instead be closed by a bottom wall 130, which can be made in a single piece with second portion 115 or otherwise fixed thereto. First portion 110 and second portion 115 can be joined together, e.g., by mutual screwing, so that respective internal cavities 120 and 125 are mutually coaxial and communicating through the respective open axial ends, thus overall defining an internal volume of valve body 105.

Valve body 105 can have one or more inlet ports 135 and at least one outlet port 140, all generically communicating or opening into the internal volume.

In the example shown, valve body 105 comprises, in particular, a single outlet port 140, which can be obtained in first portion 110, for example coaxially with internal cavity 120, and preferably at the axial end opposite that communicating with internal cavity 125 of second portion 115.

Valve body 105 of the example shown further comprises a plurality of inlet ports 135, which can also be obtained in first portion 110, for example in its side wall.

The axes of these inlet ports 135 can be orthogonal to the axis of outlet port 140, mutually coplanar and can be angularly equidistant from each other.

Valve body 105, e.g., first portion 110, can further comprise an internal channel 145 which ideally divides the internal volume of valve body 105 into two separate chambers, viz., communicating only through said internal channel 145.

These chambers include an operating chamber 150, into which all inlet ports 135 open and from which all outlet ports 140 open, in this case single outlet port 140, and a back service chamber 155.

In the example shown, operating chamber 150 is defined entirely in first portion 110 of valve body 105, while service chamber 155 is defined partially in first portion 110 and partially in second portion 115 of valve body 105.

Internal channel 145 separating and connecting these two chambers can be tubular in shape, e.g., cylindrical, and can optionally extend coaxially with single outlet port 140.

Valve body 105, e.g., first portion 110, can further comprise a valve seat 160, viz., an internal channel which ideally divides the internal volume of valve body 105, e.g., aforementioned operating chamber 150, into two separate compartments, which only communicate through said valve seat 160.

These compartments include a first compartment 165, into which all inlet ports 135 open, and a second compartment 170, from which all outlet ports 140 open, in this case single outlet port 140.

In the example shown, first compartment 165 and second compartment 170 are both defined in first portion 110.

Thereby, a fluid entering valve body 105, from any inlet port 135, can reach outlet ports 140, in this case single outlet port 140, only by passing through valve seat 160.

The internal channel defining valve seat 160 can be tubular in shape, e.g., cylindrical, and can optionally extend coaxially with single outlet port 140.

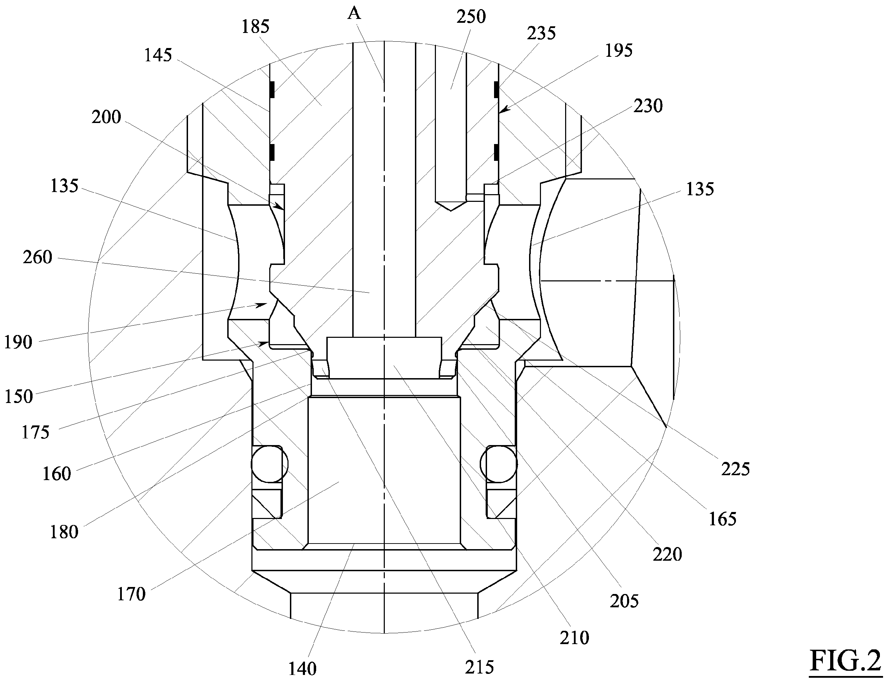

The internal channel defining valve seat 160 can further have an axial edge 175 (see Fig. 2), e.g., circular, with which it opens into first compartment 165, and optionally an opposite axial edge 180, also e.g., circular, with which it opens into second compartment 170.

Valve 100 can further comprise a shutter body 185, which is slidably accommodated within valve body 105 so as to slide with respect thereto along a predetermined rectilinear direction, which is preferably parallel and/or coincident with axis A of valve seat 160.

For example, shutter body 185 can be slidingly inserted in internal cavity 120 of first portion 110 of valve body 105.

Shutter body 185 can generally be shaped as an elongated body extending along a predetermined longitudinal axis, which is parallel to the sliding direction, e.g., parallel and/or coincident with axis A of valve seat 160.

Along this longitudinal axis, shutter body 185 can ideally be divided into a series of portions and/or sections, where each portion or section is understood as a segment of shutter body 185 extending between two planes orthogonal to the longitudinal axis.

In particular, shutter body 185 can ideally be divided into three portions, of which a portion 190 proximal to valve seat 160, an opposite portion 195 distal to valve seat 160, and a portion 200 intermediate between the former.

Proximal portion 190 can, in turn, comprise a first section 205 having a shape substantially complementary to the channel defining valve seat 160, e.g., cylindrical or (slightly) conical, with a size, e.g., diameter, substantially equal to or (slightly) less than that of the channel itself.

In particular, this first section 205 can be defined by an annular wall delimiting a central cavity 210 and which can be furrowed by a plurality of radial notches 215 extending from the internal surface to the external surface of said annular wall.

These radial notches 215, which can be made by milling, can be arranged around the axis of shutter body 185, preferably angularly equidistant from each other.

Proximal portion 190 can then comprise a second section 220 having a tapered, e.g., conical, shape which widens away from first section 205, until it reaches a size, e.g., a diameter, greater than that of the channel defining valve seat 160.

Proximal portion 190 can finally comprise a third section 225, also having a tapered, e.g., conical, shape which widens away from second section 220 and from which it can be separated by a (small) cylindrical section.

Distal portion 195 can have a substantially cylindrical shape, the diameter of which can be substantially the same as the maximum diameter of third section 225 of proximal portion 190.

Finally, intermediate portion 200 can also have a substantially cylindrical shape but of smaller diameter with respect to that of distal portion 195, so as to define with the latter an annular shoulder 230.

Distal portion 195 of shutter body 185 can be slidingly inserted in internal channel 145 of valve body 105, which can therefore act as a sliding guide.

In particular, one or more balancing grooves 235 can be interposed between the external surface of distal portion 195 of shutter body 185 and the internal surface of internal channel 145, adapted to enable a balanced passage of fluid which allows to keep shutter body 185 centred.

Sliding in valve body 105, shutter body 185, e.g., proximal portion 190 thereof, is adapted to co-operate with valve seat 160 to regulate the flow rate of fluid which, coming from one or more of inlet ports 135, is capable of reaching outlet ports 140, in this case single outlet port 140.

In particular, shutter body 185 can generally slide between a maximum closing position of valve seat 160 and a maximum opening position of valve seat 160.

In the maximum closing position (shown in Figure 2), the ratio of the overall fluid flow rate entering from all inlet ports 135 to the overall fluid flow rate exiting from all outlet ports 140, in this case from single outlet port 140, is at a minimum value.

This minimum value is preferably zero, viz., shutter body 185 in maximum closing position is preferably adapted to make valve 100 completely closed.

In the example shown, this condition can be achieved in that first section 205 of shutter body 185 is fully threaded in the channel defining valve seat 160 and second section 220, of tapered (e.g., conical) shape, rests directly on axial edge 175, completely closing the passage.

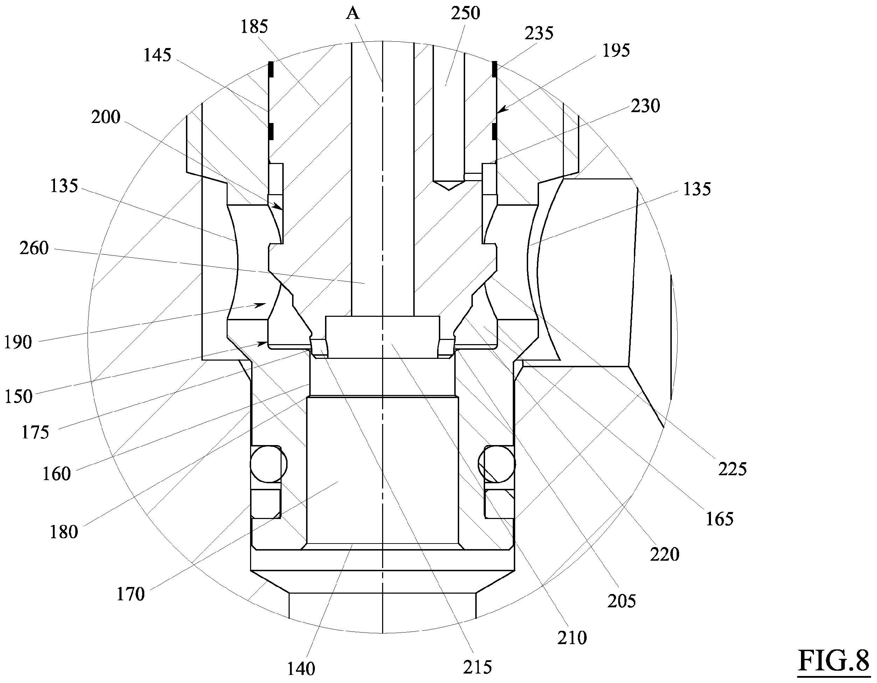

In the maximum opening position (which can indicatively be that shown in Figure 8), the ratio of the overall fluid flow rate entering from all inlet ports 135 to the overall fluid flow rate exiting from all outlet ports 140, in this case from single outlet port 140, is at a maximum value.

In the example shown, this condition can be achieved in that second section 220, of tapered (e.g., conical) shape, of shutter body 185 is spaced from axial edge 175, while first section 205 is completely removed from the channel defining valve seat 160 or nearly, so that radial notches 215 are (almost) completely open, allowing the maximum outflow of fluid.

Moving from the maximum closing position to the maximum opening position, shutter body 185 can then pass and be stopped in a plurality of intermediate positions, wherein the ratio of the overall fluid flow rate entering from all inlet ports 135 to the overall fluid flow rate exiting from all outlet ports 140, in this case from single outlet port 140, is progressively increasing starting from the minimum value (preferably zero) until reaching the maximum value.

In the example shown, this progressiveness is made possible because, during the stroke of shutter body 185, second section 220, of tapered (e.g., conical) shape, is always spaced from axial edge 175, but the passage openings defined by radial notches 215 of first section 205 open rather gradually.

Preferably, the stroke of shutter body 185 from the maximum closing position to the maximum opening position, viz., the stroke along which the exiting flow rate of fluid varies progressively (e.g., proportionally), can be greater than or equal to 1 mm, preferably greater than or equal to 2 mm, and this can be obtained, for example, by an appropriate choice of the number and size of radial notches 215.

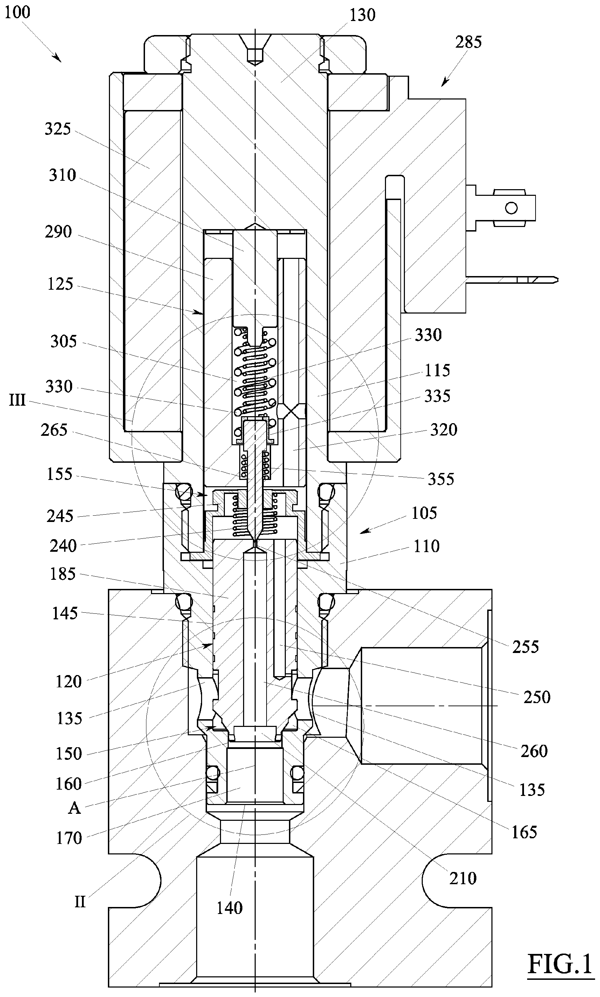

However, it cannot be excluded that, in other embodiments, the progressiveness in the regulation of the flow rate in output, as a function of the stroke of shutter body 185, can be obtained by other expedients or with different manners from those described. Returning for reference to Figure 1, valve 100 can also comprise a spring 240, which is adapted to push shutter body 185 towards the closed position.

This spring 240, which can be a helical compression spring, can be contained in service chamber 155, where it can be coaxially interposed between shutter body 185 and a counter cap 245, which can be locked in a pack between first portion 110 and second portion 115 of valve body 105.

Service chamber 155 can be in constant (hydraulic) communication with operating chamber 150, preferably with first compartment 165 into which inlet ports 135 open, e.g., by means of a ductwork 250 within shutter body 185.

Constant communication is understood to mean that communication takes place both when shutter body 185 is in maximum closing position and when shutter body 185 is in maximum opening position, as well as for any other intermediate position assumed by shutter body 185 between the above.

As better seen for example in Figure 2, ductwork 250 can comprise a longitudinal aperture parallel to the axis of shutter body 185 which opens in service chamber 155 and a radial aperture which, deriving orthogonally from the longitudinal aperture, opens for example into the side surface of intermediate portion 200.

However, it is not excluded that the communication between operating chamber 150 and service chamber 155 can be obtained in another manner, e.g., with a different ductwork or a different shape of shutter body 185 and/or the other components associated therewith.

With particular reference to figure 1, shutter body 185 can have an orifice 255, distinct and separate from optional ductwork 250, which is (potentially) capable of putting service chamber 155 in communication with second compartment 170 of operating chamber 150, (also and/or at least) when shutter body 185 is in the closed position.

This orifice 255, which can be coaxial to shutter body 185, can be obtained, for example, at the bottom of the latter, on the opposite side with respect to proximal portion 190, opening into an axial cavity 260 of shutter body 185 which flows out at the opposite end, e.g., through central cavity 210 defined by first section 205.

The passage section of orifice 255, e.g., its diameter, is preferably larger with respect to the (minimum) passage section of ductwork 250, e.g., the diameter of the radial aperture of the latter opening into first compartment 165.

Valve 100 further comprises a needle shutter 265, which is housed in service chamber 155.

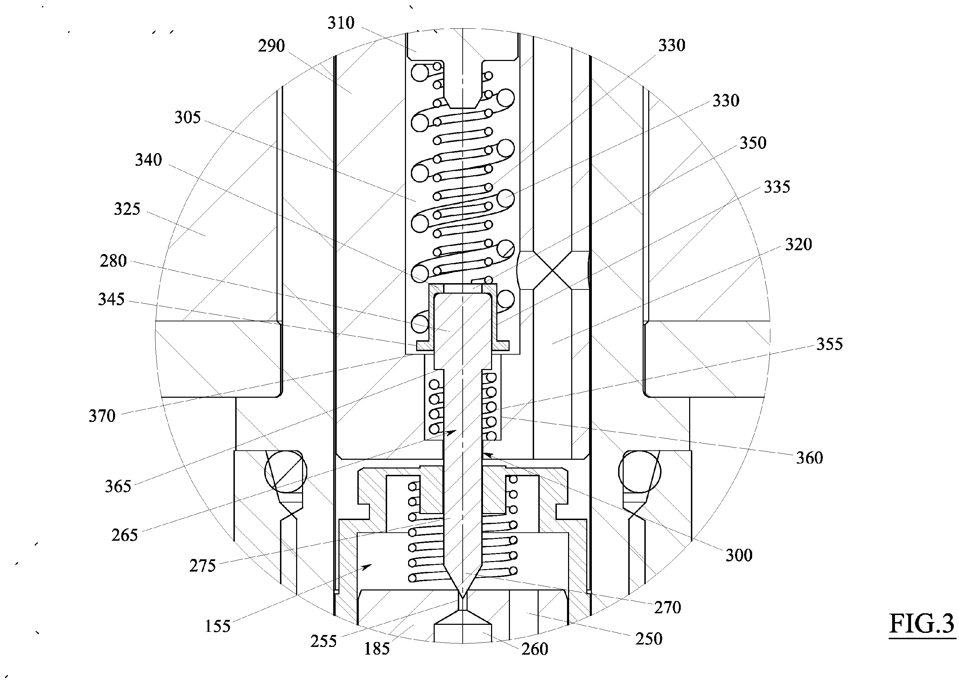

As better shown in Figure 3, needle shutter 265 can comprise a conical tip 270, coaxial with orifice 255, which narrows starting from a base section, having a larger diameter with respect to that of orifice 255, towards orifice 255 itself, until ending in a vertex capable of fitting within orifice 255.

This conical tip 270 can be placed at a first axial end of a cylindrical body 275, which can be coaxial with conical tip 270, preferably obtained in a single body therewith, and can for example have a diameter equal to the diameter of the base section thereof.

Needle shutter 265 can finally comprise a head 280 placed at the second axial end of cylindrical body 275, and preferably enlarged so as to protrude radially with respect to the latter.

This head 280, which can be obtained as a single body with cylindrical body 275, can also have a cylindrical shape, can be arranged coaxially with cylindrical body 275 and can have a diameter greater than it.

During the operation of valve 100 (which will be explained in more detail later), needle shutter 265 can assume a closed position of orifice 255, for example that shown in Figure 3.

In this closed position, conical tip 270 of needle shutter 265 is in fact threaded in orifice 255 and is in contact with its end edge, closing it completely.

Needle shutter 265 is also sliding within service chamber 155 along a predetermined rectilinear direction, so as to be able to open orifice 255.

The sliding direction of needle shutter 265 can be parallel/coincident with the axis of orifice 255, i.e., with the axis of conical tip 270, and thus, for example, parallel/coincident with the sliding direction of shutter body 185.

In the example shown, all these axes coincide with axis A of valve seat 160.

Sliding along this direction, starting from the closed position, needle shutter 265 is generally movable away/removably with respect to orifice 255, so that conical tip 270 detaches from the end edge with which it was in contact, opening the passage.

It should be noted here that, preferably, the shape of needle shutter 265 and orifice 255 are chosen so that the distance between conical tip 270 and the edge of orifice 255 can change the pressure drop across orifice 255 itself, at least as long as such a distance is maintained below a certain (relatively small) threshold.

Valve 100 can further comprise an electric actuator 285 adapted to move needle shutter 265 from the closed position towards the various open positions.

This electric actuator 285 can comprise a movable core 290, preferably of ferromagnetic material, which is coupled to needle shutter 265 and is movable with respect to valve body 105 along the same sliding direction as needle shutter 265 itself.

In general, movable core 290 is coupled to needle shutter 265 so as to be adapted to drag it, at least in the direction away from shutter body 185 and thus in the direction of detaching it from the edge of orifice 255, opening the passage thereof.

This movable core 290, which can be slidingly coupled to valve body 105, e.g., to second portion 115, is preferably contained in service chamber 155, so that all its surfaces are always subjected to substantially the same pressure, and specifically, to the pressure prevailing in service chamber 155.

For example, movable core 290 can be a body of generally cylindrical shape, with an axis preferably parallel to and/or coinciding with the axis of conical tip 270 of needle shutter 265, viz., of orifice 255, which can be slidingly guided in a corresponding cylindrical portion of service chamber 155, for example in (cylindrical) internal cavity 125 of second portion 115 of valve body 105, so as to be able to slide in a direction parallel to the axis thereof.

Going into greater detail, needle shutter 265 can be slidingly coupled to movable core 290, so that it can perform, with respect to the latter, at least small strokes along the sliding direction, viz., along the closing and opening direction of orifice 255.

For example (see Fig. 3), needle shutter 265 can be slidingly threaded in a through hole 300 of movable core 290, which can be obtained in a wall of movable core 290 near shutter body 185, opening for example into an internal cavity 305.

In particular, this through hole 300 can slidingly receive, e.g., coaxially and substantially to size, cylindrical body 275 of needle shutter 265, so that head 280 remains confined in internal cavity 305 while conical tip 270 is outside movable core 290 extending towards orifice 255.

On the opposite side of through hole 300, with respect to the sliding direction, internal cavity 305 of movable core 290 can be opened, so as to receive in coaxial insertion a leader pin 310, which is firmly fixed to valve body 105, in this case to bottom wall 130 of second portion 115.

Internal cavity 305 of movable core 290 is in communication with the remaining volume of service chamber 155, so that the same pressure presides therein as in the latter.

For this purpose, movable core 290 can be provided with an internal ductwork 320 adapted to improve communication between internal cavity 305 and a space between movable core 290 and shutter body 185.

Such internal ducting 320 can also put said space in communication with a gap between movable core 290 and bottom wall 130 of valve body 105.

Electric actuator 285 can also comprise an electric coil 325 which, when crossed by current, is adapted to create a magnetic field adapted to attract movable core 290 so as to make it slide in the direction away from shutter body 185.

By varying the intensity of the current, it is advantageously possible to vary the intensity of the magnetic field, and thus the force with which movable core 290 is moved away from shutter body 185.

Valve 100 can comprise one or more first springs 330, e.g., helical compression springs having an axis parallel to the sliding direction, each of which is adapted to act on movable core 290 and on needle shutter 265, so as to push them in the direction towards shutter body 185, viz., in contrast to the electromagnetic force generated by electric coil 325 (when crossed by current).

For this purpose, each first spring 330 can be comprised in internal cavity 305 of movable core 290, where it can abut bottom wall 130 of valve body 105 or, as in the embodiment shown, leader pin 310 fixed to bottom wall 130.

First springs 330 can act on movable core 290 and/or on needle shutter 265 in a direct manner or, more preferably, by means of the interposition of a further intermediate body 335.

This intermediate body 335 can be free to make relative strokes in the sliding direction, either with respect to needle shutter 265 or with respect to movable core 290.

In practice, each first spring 330 can be adapted to push intermediate body 335 towards and against second end of needle shutter 265, for example towards and against head 280, so that said intermediate body 335, abutting on needle shutter 265, is adapted to push the latter towards shutter body 185 and the closed position of orifice 255.

At the same time, each first spring 330 can be adapted to push intermediate body 335 also towards and against a surface 370 of movable core 290, for example of internal cavity 305, so that intermediate body 335, abutting on said surface 370, is adapted to also push movable core 290 in the direction of towards shutter body 185.

In particular, it is preferable for intermediate body 335, pushed by first springs 330, to abut against surface 370, before needle shutter 265 has reached a maximum extraction position with respect to movable core 290.

In practice, after intermediate body 335 has abutted, pushed by first springs 330, against surface 370, thus remaining integral with movable core 290, needle shutter 265 can instead still be free to make a further stroke, with respect to movable core 290, in the direction towards shutter body 185.

By way of example, intermediate body 335 can be shaped like a bushing, coaxially and slidingly threaded onto needle shutter 265, for example on head 280, which can have a bottom wall 340, which closes an axial end thereof and is adapted to make the axial abutment against needle shutter 265 itself, and a projecting annular flange 345, placed at the opposite axial end, which is adapted to make the abutment on surface 370 in movable core 290.

In this case, bottom wall 340 and protruding annular flange 345 of intermediate body 335 can also serve as abutment for a respective one of first springs 330, which can be axially helical compression springs inserted into each other.

Intermediate body 335, e.g., bottom wall 340 of the bushing, can be provided with an aperture 350, having an axis preferably parallel/coincident with the axis of conical tip 270 of needle shutter 265, viz., orifice 255, which is adapted to constantly expose the end of needle shutter 265 which is distal from orifice 255, e.g., head 280, to the pressure prevailing in service chamber 155.

This aperture 350 can have a diameter substantially equal to the diameter of cylindrical body 275 of needle shutter 265.

Finally, valve 100 can comprise at least a second spring 355, in the example only one, which is operatively interposed between movable core 290 and needle shutter 265, so as to push the latter to slide with respect to movable core 290, always in the same sliding direction, but in the direction away from shutter body 185, for example towards and against intermediate body 335.

This second spring 355, which can also be a helical compression spring, can be operatively interposed between the second end of needle shutter 265, e.g., head 280, and the wall of movable core 290 in which through hole 300 is obtained.

For example, second spring 355 can be accommodated in an indentation 360 made in an internal surface of internal cavity 305 of movable core 290, preferably in surface 370 on which intermediate body 335 abuts, so as to be interposed between a bottom surface of said indentation 360, in which through hole 300 can also be obtained, and the second end of needle shutter 265, preferably between said bottom surface and an annular shoulder 365 made between cylindrical body 275 and (enlarged) head 280 of needle shutter 265.

In particular, this second spring 355 can be oriented with axis parallel to the sliding direction of needle shutter 265 and can be coaxially threaded onto its cylindrical body 275.

With this shape, the operation of valve 100 is described below, considering that inlet ports 135 are generally placed in communication with a pressurised fluid source, while each of outlet ports 140, in this case single outlet port 140, is placed in communication with an outflow at a lower pressure, for example but not necessarily at atmospheric pressure.

That being said, when electric coil 325 of electric actuator 285 is not powered and shutter body 185 is in the closed position (as shown in Figures 1 to 3), first springs 330 are adapted to maintain needle shutter 265 in the closed position of orifice 255.

In this condition, service chamber 155 is hydraulically in communication only with first compartment 165 of operating chamber 150, and isolated with respect to second compartment 170.

Therefore, while in second compartment 170 of operating chamber 150 the pressure of the outflow prevails, in service chamber 155 the higher pressure of the fluid in input prevails.

This pressure difference results in shutter body 185 remaining firmly in the closed position.

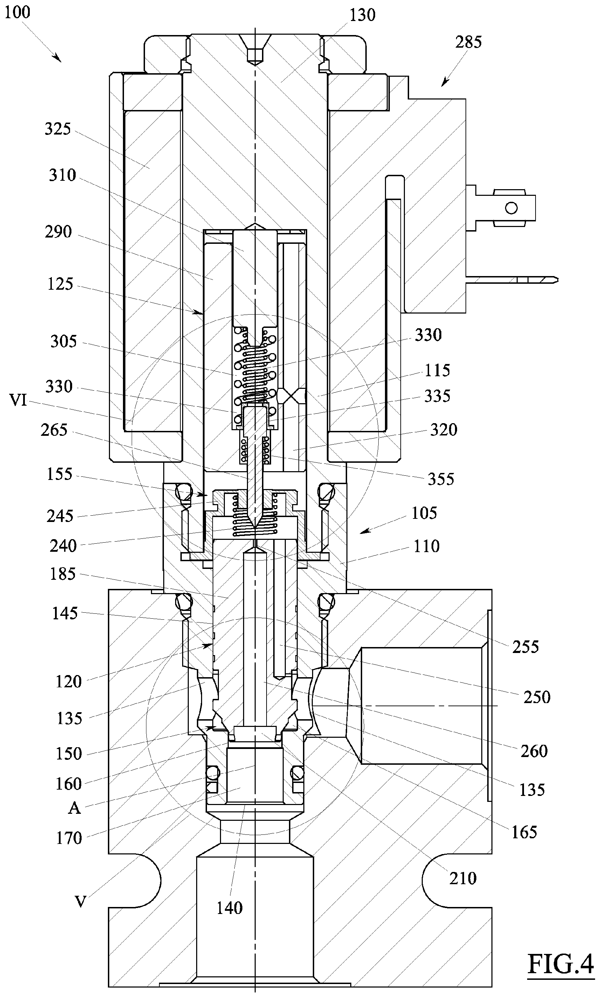

Powering electric coil 325 with an electric current of a certain intensity, it is possible to create a magnetic attraction force which tends to distance movable core 290 with respect to shutter body 185, as shown in Figures 4 to 6.

This stroke can occur in an essentially free manner (viz., second spring 355 can be dimensioned to be initially unloaded), or at most with a slight compression of second spring 355, until intermediate body 335, maintained stationary by first springs 330, comes into contact with surface 370 of movable core 290.

Subsequently, the stroke of movable core 290 causes a simultaneous stroke of needle shutter 265, which is kept in contact with intermediate body 335 by second spring 355, while first springs 330 progressively compress.

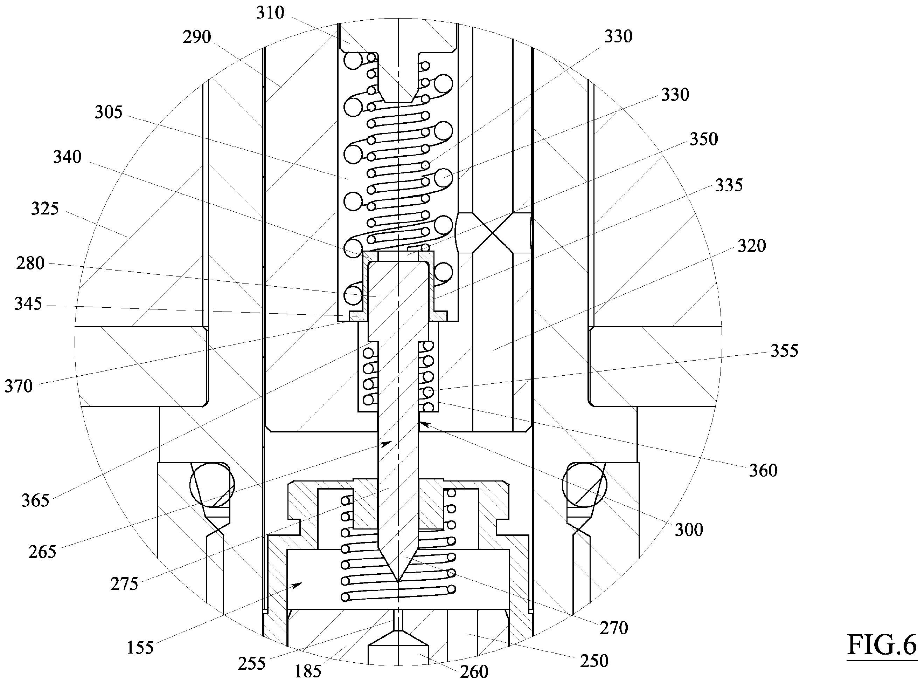

Thanks to this stroke, needle shutter 265 opens orifice 255 (see Figures 4 and 6), putting service chamber 155 in communication with second compartment 170 of operating chamber 150.

Thereby, the pressure in service chamber 155, or at least in the space between shutter body 185 and movable core 290, decreases with respect to the pressure of the fluid in input.

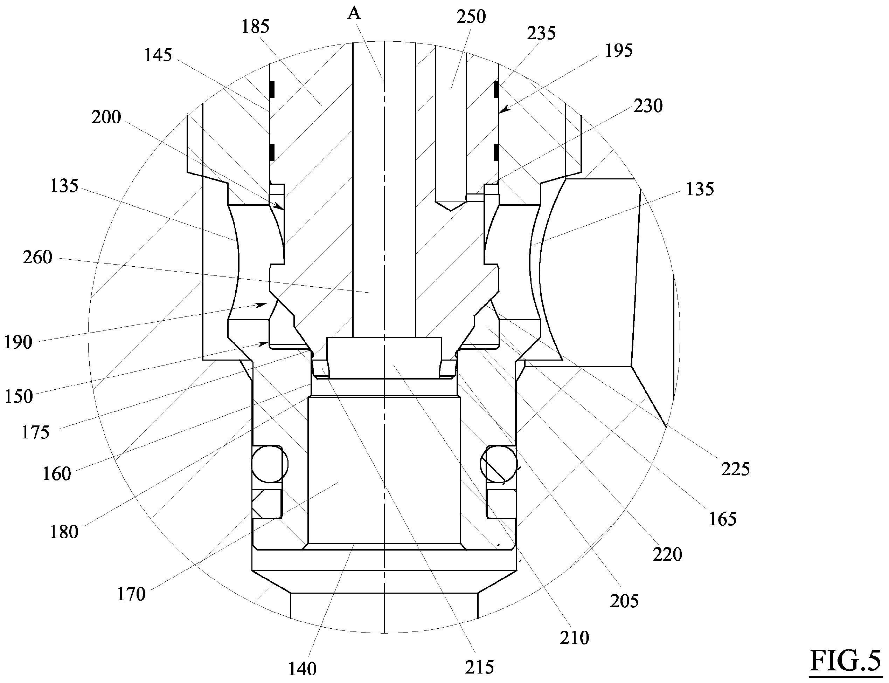

Therefore, as can be understood from the comparison of Figures 5 and 8, the pressure of the fluid in input, which prevails in first compartment 165 of operating chamber 150 and which acts, for example, on tapered sections 220 and/or 225 and/or on annular shoulder 230 of shutter body 185, is capable of moving the latter, in the same direction in which needle shutter 265 was previously moved, opening valve seat 160.

This stroke of shutter body 185 causes it to approach needle shutter 265, which then reduces the degree of opening of orifice 255 and causes a certain increase in pressure in service chamber 155, until a condition of equilibrium is reached between the hydraulic thrusts acting on shutter body 185 (which then stops).

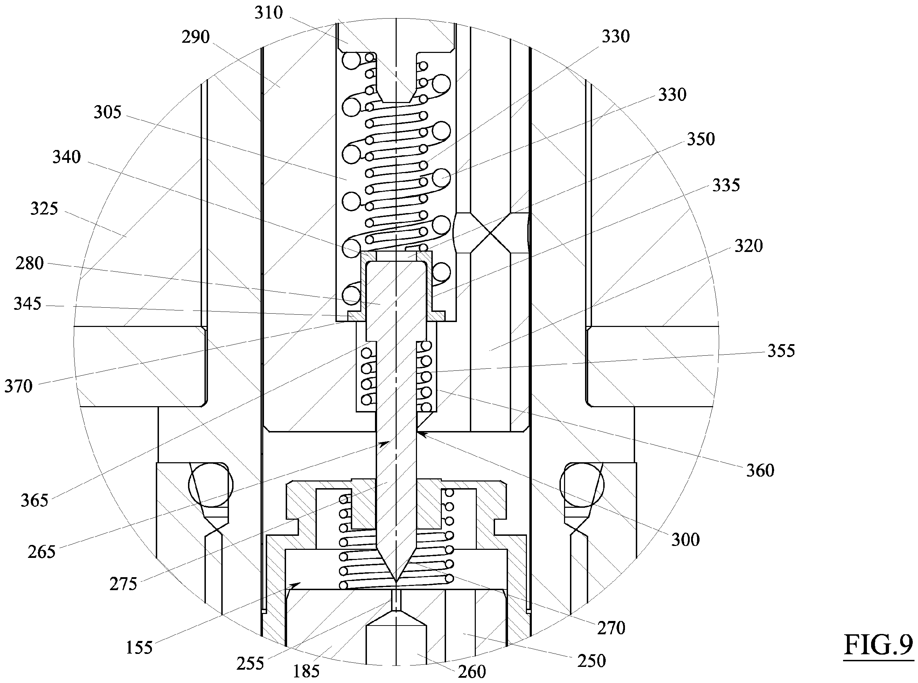

It should be particularly noted that, generally, when this equilibrium is reached, orifice 255 is still open, viz., the equilibrium is generally reached before orifice 255 can be completely closed by conical tip 270 of needle shutter 265 (see Fig. 9).

Merely by way of indication, for a stroke of needle shutter 265 of 1 mm, it can be assumed that shutter body 185 reaches equilibrium after having moved in the same direction but by a slightly smaller amount, e.g., 0.9 mm.

In any case, thanks to this stroke of shutter body 270, which at least partially opens valve seat 160, the pressurised fluid coming from inlet ports 135 is able to pass through valve 100 and flow out of outlet ports 140, in this case from single outlet port 140, with a certain flow rate which depends, precisely, on the degree of opening.

By increasing the intensity of the electric current powering electric coil 325, it is in fact possible to move needle shutter 265 even more, further compressing first springs 330, so that, to restore the balance of the hydraulic thrusts, shutter body 185 is forced to move further in pursuit of needle shutter 265, thereby opening valve seat 160 further and causing a proportional increase in the flow rate of fluid passing through and flowing out of outlet ports 140, in this case single outlet port 140.

All this until shutter body 185 moves to the maximum opening position (which, for the sake of simplicity, can be assimilated to that shown in Figure 8), which corresponds to the maximum flow rate which can pass through valve 100.

When shutter body 185 is in this complete opening position, or in any other intermediate position between the open and closed position, the pressure of the fluid in input could increase.

Such an increase in pressure could cause an undesirable increase in the flow rate of fluid in output from valve 100 if shutter body 185 remained stationary in its position. However, the increase in pressure of the fluid in input causes an increase of the pressure in service chamber 155.

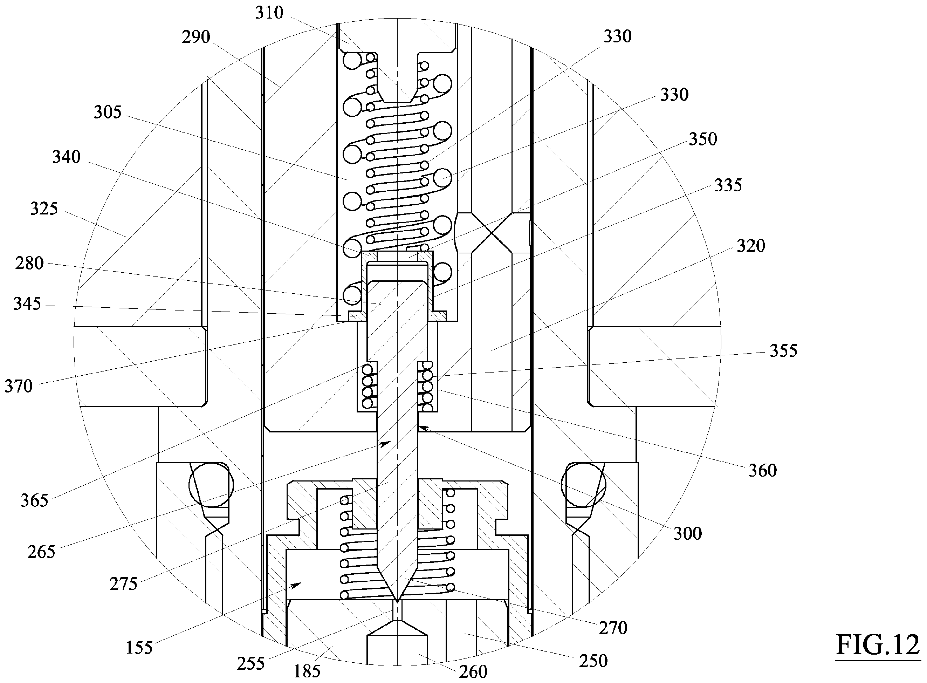

This increase in pressure has no impact on movable core 290, which however remains stationary (or nearly), but can cause the stroke of needle shutter 265, with respect to movable core 290, towards orifice 255 of shutter body 185 (see Fig. 12).

In fact, the pressure prevailing in service chamber 155 acts, above (with respect to the Figures), on the entire surface of needle shutter 265, e.g., on the entire surface of head 280, while, below (always with respect to the Figures), on a surface reduced by an amount equal to the vertex of conical tip 270, e.g., on annular shoulder 365 of head 280 and on the conical surface of conical tip 270, except at the vertex.

In fact, as such a vertex is facing and very close to orifice 255, is subject to at least slightly less pressure with respect to that prevailing in service chamber 155.

This difference in surfaces means that the hydraulic thrusts are not perfectly balanced and thus, as mentioned, needle shutter 265 can move with respect to movable core 290, towards orifice 255 of shutter body 185, sliding with respect to intermediate body 335 and compressing second spring 355, until equilibrium is achieved.

Thereby, following the aforesaid increase in pressure of the fluid in input, although movable core 290 remains substantially stationary, needle shutter 265 tends to close orifice 255, causing a further increase in pressure in service chamber 155.

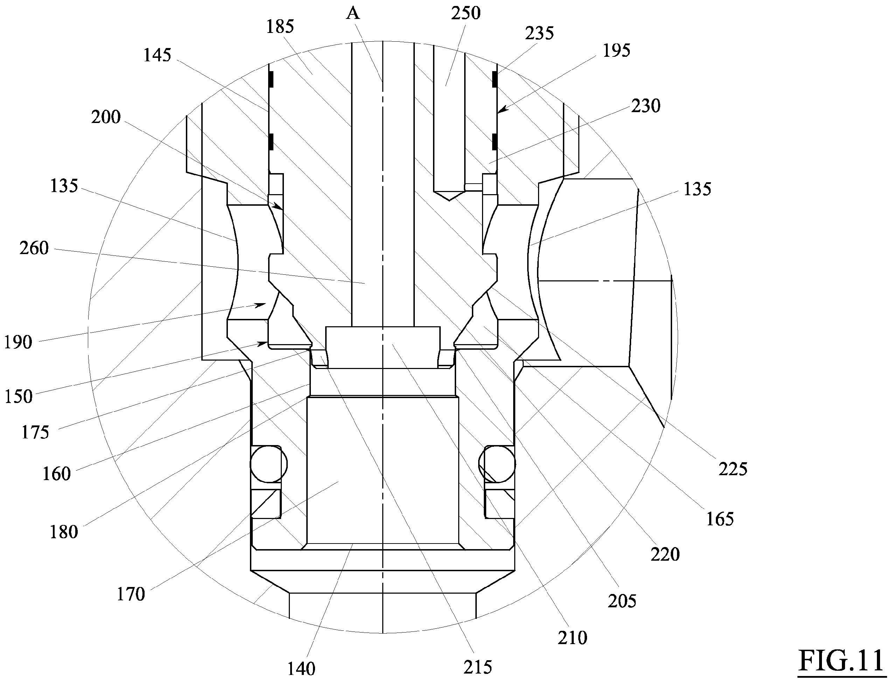

As can be understood from a comparison of Figures 8 and 11, this further increase in pressure pushes shutter body 185 towards the closed position until a new equilibrium position is reached, which corresponds to a lower degree of opening of valve seat 160 with respect to before the pressure of the fluid in input increased.

Thereby, despite the aforesaid increase in pressure of the fluid in input, the flow rate which passes through valve 100 can be effectively kept substantially constant.

Obviously, this compensation, which allows to obtain a constant flow rate, can also occur in the opposite manner, should the pressure of the fluid in input subsequently decrease. When the power supply of electric actuator 285 is finally interrupted, first springs 330 push movable core 290 and needle shutter 265 towards shutter body 185, completely closing orifice 255 and pushing shutter body 185 itself back into the complete closing position of valve seat 160, where it is maintained also, and more importantly, thanks to the restored large pressure difference between service chamber 155 and second compartment 170 of operating chamber 150.

Thanks to the ability to maintain the flow rate constant even in the event of fluctuations in the pressure of the fluid in input, valve 100 described above can find useful application, for example, within hydraulic circuits which govern the descent of loading platforms, such as the forks of forklifts or other similar devices.

In fact, such loading platforms can be moved vertically by means of one or more single-acting hydraulic jacks, the operating chamber of which is selectively connected with a pump adapted to supply a fluid (e.g., oil), to cause the loading platform to rise, or with an outflow, to cause the descent thereof, exploiting the very weight of the loading platform which pushes the fluid to exit from the operating chamber of the jack.

Therefore, if the loading platform is light (e.g., empty), the pressure with which the fluid flows out from the jack will generally be lower with respect to the case in where the loading surface is heavy (e.g., loaded).

Valve 100 can be inserted between the operating chamber of the hydraulic jack and the outflow, so that by regulating the flow rate of fluid being discharged, it is possible to regulate the rate of descent of the loading platform.

As such valve 100 is able to compensate for any pressure variations of the fluid in input, it allows the same rate of descent to be obtained whether the loading platform is empty (and therefore light) or carrying loads (and therefore heavier).

Obviously, a person skilled in the art can make numerous modifications of a technical application nature to everything described, without thereby departing from the invention as claimed below.

## Claims

1. A flow control valve (100), comprising:
- a valve body (105) having at least one inlet port (135), at least one outlet port (140) and a valve seat (160),
- a shutter body (185) slidingly coupled to the valve body (105), so as to be able to slide with respect to the latter along a predetermined sliding direction, from a maximum closing position of the valve seat (160), wherein the ratio between a fluid flow rate overall entering from all the inlet ports (135) and a fluid flow rate overall exiting from all the outlet ports (140) is at a minimum value, preferably zero, towards a maximum opening position of the valve seat (160), wherein the ratio of the overall fluid flow rate entering from all the inlet ports (135) to the overall fluid flow rate exiting from all the outlet ports (140) is at a maximum value, passing through a plurality of intermediate positions, wherein the ratio of the overall fluid flow rate entering from all the inlet ports (135) to the overall fluid flow rate exiting from all the outlet ports (140) is progressively increasing from the minimum value to the maximum value,
- an orifice (255) made in the shutter body (185) and capable of putting in communication, when the shutter body (185) is in the closed position of the valve seat (160), at least one of the outlet ports (140) with a service chamber (155) communicating with at least one of the inlet ports (135),
- a needle shutter (265) accommodated in the service chamber (155) and sliding therein along the same sliding direction of the shutter body (185) from a closing position of said orifice (255) towards various opening positions of said orifice (255) moving in a direction away from the shutter body (185), and vice versa from the opening positions of said orifice (255) towards the closing position of the orifice (255), moving in a direction towards the shutter body (185),
- a movable core (290) accommodated in the service chamber (155), which is sliding in the same sliding direction as the needle shutter (265) in both directions, and to which the needle shutter (265) is coupled in such a way that it can be dragged in sliding by it, at least in the direction away from the shutter body (185), said movable core (290) being operable in the direction away from the shutter body (185) by an electric coil (325) adapted to be electrically powered,
- one or more first springs (330) adapted to push the movable core (290) and/or the needle shutter (265) along the sliding direction in the direction towards the shutter body (185), and
- at least a second spring (355), operatively interposed between said movable core (290) and said needle shutter (265), which, while opposing with an elastic reaction force thereof, allows the needle shutter (265) to make a relative movement with respect to the movable core (290), along the sliding direction and in the direction towards the shutter body (185), due to an increase in pressure in the service chamber (155).

2. A flow control valve (100) according to claim 1, wherein the second spring (355) is a helical compression spring threaded onto the needle shutter (265).

3. A flow control valve (100) according to claim 1 or 2, wherein said one or more first springs (330) are adapted to act on the movable core (290) and/or on the needle shutter (265) through an intermediate body (335), which is released from the movable core (290) and from the needle shutter (265) with respect to the sliding direction, but is adapted to abut on a head (280) of the needle shutter (265), which is distal with respect to the orifice (255), and on a surface (370) of the movable core (290), due to the thrust exerted by said one or more first springs (330), and wherein the elastic reaction of the second spring (355) is adapted to push the needle shutter (265) towards said intermediate body (335).

4. A flow control valve (100) according to claim 3, wherein the intermediate body (335) comprises a bushing slidably threaded onto the needle shutter (265) so as to allow reciprocal movements along the sliding direction, a bottom wall (340) adapted to close an end of the bushing and to abut the head (280) of the needle shutter (265), and an annular flange (345) protruding from the opposite end of the bushing adapted to abut the surface (370) of the movable core (290).

5. A flow control valve (100) according to claim 3 or 4, wherein said surface (370) of the movable core (290) on which the intermediate body (335) abuts comprises a recess (360) in which the second spring (355) is accommodated, which is interposed between a bottom surface of said recess (360) and the head (280) of the needle shutter (265).

6. A flow control valve (100) according to claim 5, wherein said recess is in communication with a through hole (300), through which the needle shutter (265) protrudes from the movable core (290), projecting towards the orifice (255) of the shutter body (185).

7. A flow control valve (100) according to any one of claims 3 to 6, wherein the intermediate body (335), e.g., the bottom wall of the bushing, has an aperture (350) adapted to expose the head (280) of the needle shutter (265) to the pressure of the service chamber (155).

8. A flow control valve (100) according to any one of claims 3 to 7, wherein said intermediate body (335) is contained in an internal cavity (305) of the movable core (290), which is constantly in communication with the service chamber (155), for example by means of a ductwork (320) obtained directly in the movable core (290) itself.
